(19) Europäisches Patentamt
European Patent Office
Office européen des brevets

(11) **EP 4 083 919 A1**

(12) **EUROPEAN PATENT APPLICATION**
published in accordance with Art. 153(4) EPC

(43) Date of publication:
**02.11.2022 Bulletin 2022/44**

(21) Application number: **20915483.0**

(22) Date of filing: **09.12.2020**

(51) International Patent Classification (IPC):
**G06T 7/73** (2017.01)    **G01S 17/02** (2020.01)

(86) International application number:
**PCT/CN2020/135029**

(87) International publication number:
**WO 2021/147549 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.01.2020 CN 202010062310**

(71) Applicant: **Shenzhen Pudu Technology Co., Ltd.
Shenzhen, Guangdong 518000 (CN)**

(72) Inventors:
• **HE, Kejun**
  **Shenzhen, Guangdong 518000 (CN)**
• **CHEN, Meiwen**
  **Shenzhen, Guangdong 518000 (CN)**
• **GUO, Cong**
  **Shenzhen, Guangdong 518000 (CN)**

(74) Representative: **Appleyard Lees IP LLP
15 Clare Road
Halifax HX1 2HY (GB)**

(54) **CLOSED-LOOP DETECTION METHOD AND SYSTEM, MULTI-SENSOR FUSION SLAM SYSTEM, ROBOT, AND MEDIUM**

(57) The present invention provides a closed-loop detection method and system, a multi-sensor fusion SLAM system, a robot, and a medium. Said system runs on a mobile robot, and comprises a similarity detection unit, a visual pose solving unit, and a laser pose solving unit. According to the closed-loop detection system, the multi-sensor fusion SLAM system and the robot provided in the present invention, the speed and accuracy of closed-loop detection in cases of a change in a viewing angle of the robot, a change in the environmental brightness, a weak texture, etc. can be significantly improved.

FIG. 1

EP 4 083 919 A1

**Description**

**CROSS-REFERENCES TO RELATED APPLICATIONS**

This application claims priority to Chinese patent application No. 202010062310.1, entitled "LOOP CLOSURE DETECTION SYSTEM, MULTI-SENSOR FUSION SLAM SYSTEM, AND ROBOT" and filed with the Chinese patent office on January 20, 2020, the entire contents of which are incorporated herein by reference.

**TECHNICAL FIELD**

The present disclosure relates to the field of robot technologies, and more particularly, to a loop closure detection method and system, a multi-sensor fusion SLAM system, a robot, and a medium.

**BACKGROUND**

SLAM (simultaneous localization and mapping) technology has been extensively studied in the past decades. Although the SLAM technology solves the problem of simultaneous localization and mapping of robots in unknown environments, there are still challenges in dealing with diverse environments and long continuous operation. SLAM can run on a wide variety of sensors. Over the past few years, a lidar-based SLAM system has become more popular than a vision-based system due to robustness to environmental changes. However, pure lidar systems have drawbacks, which may fail in environments with repeated structures such as tunnels or corridors.

**SUMMARY**

A system operating for a long time, when visiting a same place, is not only affected by moving objects, but also affected by changes in a viewing angle and brightness, making it extremely difficult to use images for scene recognition.
In view of this, an objective of the present disclosure is to provide a loop closure detection method and system, a multi-sensor fusion SLAM system, a robot, and a medium, so as to improve the speed and accuracy of loop closure detection in cases of a change in a viewing angle of the robot, a change in the environmental brightness, a weak texture, etc.
In order to achieve the above objective, the following technical solutions are provided in implementations of the present disclosure.
The present disclosure provides a loop closure detection system, including:

a similarity detection unit configured to extract an image descriptor of a current keyframe, compare the image descriptor with an image descriptor of a keyframe in a keyframe data set, select a similar keyframe with highest similarity, and insert the similar keyframe into the keyframe data set;
a visual pose solving unit configured to match feature points of the current keyframe and the similar keyframe through a fast feature point extraction and description algorithm, remove mismatched feature points by using a random sample consensus (RANSAC) algorithm and a fundamental matrix model, and when the number of correctly matched feature points reaches a third threshold, solve relative pose transformation from the current keyframe to the similar keyframe by using the RANSAC algorithm and a perspective-n-point (PnP) method; and
a laser pose solving unit configured to select two voxel subgraphs associated with the current keyframe and the similar keyframe respectively, take the relative pose transformation as an initial value, and match the two voxel subgraphs by using an iterative closest point (ICP) algorithm, to obtain final relative pose transformation.

In this case, the speed and accuracy of loop closure detection in cases of a change in a viewing angle of the robot, a change in the environmental brightness, a weak texture, etc. can be significantly improved.
The loop closure detection system extracts the image descriptor of the keyframe by using a deep neural network, compares the image descriptor with an image descriptor of a previous keyframe to determine whether a closed loop exists, and if the closed loop exists, determines pose transformation of the two keyframes by using the PnP method, and solves a loop closure pose constraint according to the pose transformation and the voxel subgraph.
The present disclosure further provides a multi-sensor fusion SLAM system. The SLAM system includes the loop closure detection system as described above, and the SLAM system further includes:

a scanning matching module configured to use pose information as an initial value, match laser scanned point cloud with a voxel map to solve an advanced pose, integrate the point cloud into the voxel map according to the advanced pose, and derive a new voxel subgraph, the laser scanning matching module generating a laser matching constraint;

and

a visual laser image optimization module configured to correct an accumulated error of the system according to the pose information, the laser matching constraint, and the loop closure pose constraint after the closed loop occurs.

The loop closure pose constraint is sent to the laser scanning matching module.

In this case, the calculation amount of laser matching constraint optimization can be reduced by using a voxel subgraph so that the pose calculation is more accurate, the accumulated error of long-time operation of the system can be corrected in time by means of sufficient fusion of modules and the loop closure detection system, and the robustness of the system and the accuracy of positioning and mapping are integrally improved.

The laser scanned point cloud is matched with the voxel map to solve the advanced pose by using an ICP algorithm.

The visual inertia module includes a visual front-end unit, an inertial measurement unit (IMU) pre-integration unit, and a sliding window optimization unit. The visual front-end unit is configured to select the keyframe. The IMU pre-integration unit is configured to generate an IMU observation value. The sliding window optimization unit is configured to jointly optimize a visual reprojection error, an inertial measurement error, and a mileage measurement error.

It follows from the above that the IMU pre-integration unit can remove the influence of acceleration of gravity on poses and speeds, so that a newly defined IMU observation value is irrelevant to a pose and a speed of integration of the initial value, and the optimization is sped up without repeated re-integration during the optimization, thereby improving the efficiency of the sliding window optimization unit in calculating a Jacobian matrix and a covariance matrix of pre-integration increments and pre-integration errors of adjacent frames. The sliding window optimization unit adopts window optimization instead of global optimization, which can significantly reduce the calculation amount and ensure the calculation speed. The visual inertia module can output real-time accurate pose information for the laser scanning matching module.

The visual front-end unit takes a monocular camera or binocular camera as input, the monocular camera or binocular camera being configured to capture initial images. The visual front-end unit tracks feature points of each frame by using a Kanade-Lucas-Tomasi (KLT) sparse optical flow algorithm, the visual front-end unit includes a detector. The detector detects corner features and keeps a minimum number of the feature points in each of the initial images. The detector is configured to set a minimum pixel interval between two adjacent feature points, and the visual front-end unit removes distortion of the feature points, removes mismatched feature points by using a RANSAC algorithm and a fundamental matrix model, and projects correctly matched feature points onto a unit sphere.

It follows from the above that the feature points can be further optimized.

The selecting the keyframe specifically includes: determining whether an average parallax of the tracked feature points between a current frame and the latest keyframe exceeds a threshold, taking the current frame as a new keyframe if the average parallax exceeds a first threshold, and taking the frame as the new keyframe if the number of the tracked feature points of the frame is below a second threshold.

In this case, complete loss of feature tracking is prevented.

The laser scanning matching module includes a lidar. The lidar is configured to acquire a scanning point, transform the scanning point according to the pose information and the IMU observation value, and convert the scanning point into a three-dimensional point cloud in a coordinate system where the robot is located at a current moment.

It follows from the above that serious motion distortion generated when a rotation speed of the lidar is slower than a moving speed of the robot can be prevented, thereby significantly improving the accuracy of pose estimation.

The present disclosure also provides a robot. The robot includes the loop closure detection system as described above.

A loop closure detection method is further provided. The loop closure detection method is applied to a mobile robot and includes:

extracting an image descriptor of a current keyframe, comparing the image descriptor with an image descriptor of a keyframe in a keyframe data set, selecting a similar keyframe with highest similarity, and inserting the similar keyframe into the keyframe data set;

matching feature points of the current keyframe and the similar keyframe through a fast feature point extraction and description algorithm, removing mismatched feature points by using a RANSAC algorithm and a fundamental matrix model, and when the number of correctly matched feature points reaches a third threshold, solving relative pose transformation from the current keyframe to the similar keyframe by using the RANSAC algorithm and a PnP method; and

selecting two voxel subgraphs associated with the current keyframe and the similar keyframe respectively, taking the relative pose transformation as an initial value, and matching the two voxel subgraphs by using an ICP algorithm, to obtain final relative pose transformation.

Optionally, the method further includes:
extracting the image descriptor of the keyframe by using a deep neural network, comparing the image descriptor with an image descriptor of a previous keyframe to determine whether a closed loop exists, and if the closed loop exists, determining pose transformation of the two keyframes by using the PnP method, and solving a loop closure pose constraint according to the pose transformation and the voxel subgraph.

A computer storage medium is further provided. The computer storage medium stores a computer program. When the computer program is executed, the loop closure detection method as described above is performed.

According to the loop closure detection system, the multi-sensor fusion SLAM system and the robot provided in the present disclosure, the speed and accuracy of loop closure detection in cases of a change in a viewing angle of the robot, a change in the environmental brightness, a weak texture, etc. can be significantly improved.

## BRIEF DESCRIPTION OF THE DRAWINGS

FIG. 1 is a schematic diagram illustrating a loop closure detection system according to an implementation of the present disclosure.

FIG. 2 is a schematic diagram illustrating a multi-sensor fusion SLAM system according to an implementation of the present disclosure.

FIG. 3 is a schematic diagram illustrating a visual inertia module of the multi-sensor fusion SLAM system according to an implementation of the present disclosure.

## DETAILED DESCRIPTION OF THE EMBODIMENTS

Preferred implementations of the present disclosure are described in detail below with reference to the accompanying drawings. In the following description, the same components are denoted by the same reference numerals, and the description thereof will not be repeated. In addition, the accompanying drawings are merely schematic, and ratio of dimensions of the components or shapes of the components may be different from the actual ones.

Implementations of the present disclosure relate to a loop closure detection system, a multi-sensor fusion SLAM system, and a robot.

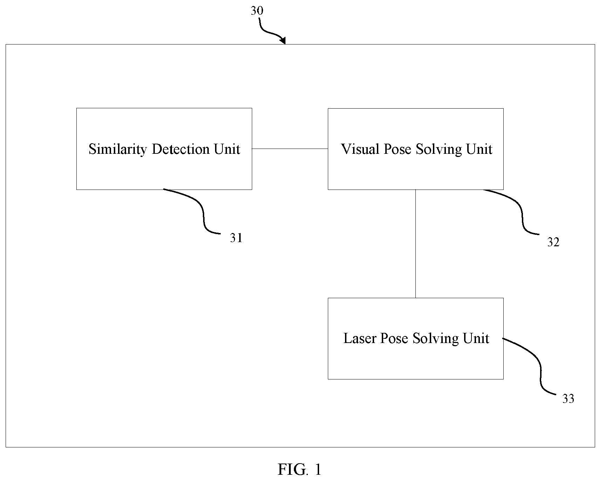

As shown in FIG. 1, a loop closure detection system 30 includes: a similarity detection unit 31, a visual pose solving unit 32, and a laser pose solving unit 33. The similarity detection unit 31 is configured to extract an image descriptor of a current keyframe, compare the image descriptor with an image descriptor of a keyframe in a keyframe data set, select a similar keyframe with highest similarity, and insert the similar keyframe into the keyframe data set. The visual pose solving unit 32 is configured to match feature points of the current keyframe and the similar keyframe through a fast feature point extraction and description algorithm, remove mismatched feature points by using a RANSAC algorithm and a fundamental matrix model, and when the number of correctly matched feature points reaches a third threshold, solve relative pose transformation from the current keyframe to the similar keyframe by using the RANSAC algorithm and a PnP method. The laser pose solving unit 33 is configured to select two voxel subgraphs associated with the current keyframe and the similar keyframe respectively, take the relative pose transformation as an initial value, and match the two voxel subgraphs by using an ICP algorithm, to obtain final relative pose transformation. In this case, the speed and accuracy of loop closure detection in cases of a change in a viewing angle of the robot, a change in the environmental brightness, a weak texture, etc. can be significantly improved.

In some examples, current loopback check is considered valid only when the number of interior points solved is greater than a set threshold.

In this implementation, the loop closure detection system 30 extracts the image descriptor of the keyframe by using a deep neural network, compares the image descriptor with an image descriptor of a previous keyframe to determine whether a closed loop exists, and if the closed loop exists, determines pose transformation of the two keyframes by using the PnP method, and solves a loop closure pose constraint according to the pose transformation and the voxel subgraph. Thus, the efficiency of loop closure detection can be significantly improved.

An implementation of the present disclosure relates to a multi-sensor fusion SLAM system 100. The system operates on a mobile robot. The SLAM system 100 includes the loop closure detection system 30 as described above. The loop closure detection system 30 will not be described in detail again.

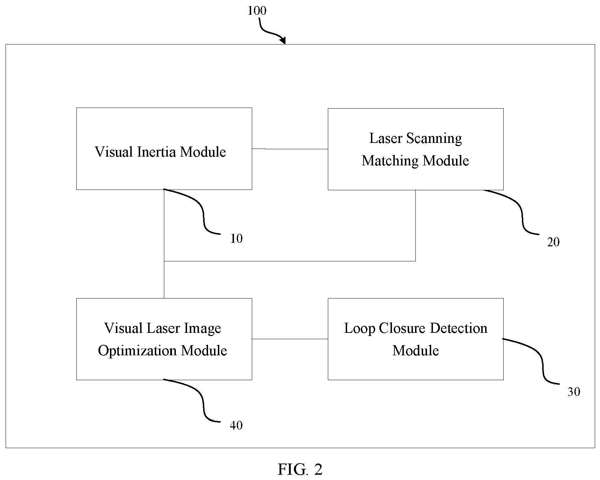

As shown in FIG. 2, the multi-sensor fusion SLAM system 100 further includes: a visual inertia module 10, a laser scanning matching module 20, and a visual laser image optimization module 40. The visual inertia module 10 is configured to output pose information. The laser scanning matching module 20 is configured to use the pose information as an initial value, match laser scanned point cloud with a voxel map to solve an advanced pose, integrate the point cloud into the voxel map according to the advanced pose, and derive a new voxel subgraph. The laser scanning matching module generates a laser matching constraint. The visual laser image optimization module 20 is configured to correct an accumulated error of the system according to the pose information, the laser matching constraint, and the loop closure pose constraint after the closed loop occurs. The loop closure detection system 30 sends the loop closure pose constraint to the laser scanning matching module. In this case, the calculation amount of laser matching constraint optimization can be reduced by using a voxel subgraph so that the pose calculation is more accurate, an accumulated error of long-time operation of the system can be corrected in time by means of sufficient fusion of modules, and the robustness of the system and the accuracy of positioning and mapping are integrally improved.

In this implementation, the laser scanned point cloud is matched with the voxel map to solve the advanced pose by using an ICP algorithm.

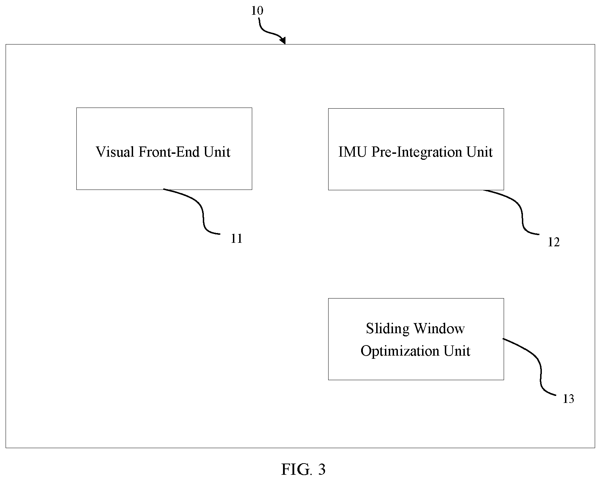

As shown in FIG. 3, in this implementation, the visual inertia module 10 includes a visual front-end unit 11, an IMU pre-integration unit 12, and a sliding window optimization unit 13. The visual front-end unit 11 is configured to select the keyframe. The IMU pre-integration unit 12 is configured to generate an IMU observation value. The sliding window optimization unit 13 is configured to jointly optimize a visual reprojection error, an inertial measurement error, and a mileage measurement error. Thus, the IMU pre-integration unit can remove the influence of acceleration of gravity on poses and speeds, so that a newly defined IMU observation value is irrelevant to a pose and a speed of integration of the initial value, and the optimization is sped up without repeated re-integration during the optimization, thereby improving the efficiency of the sliding window optimization unit in calculating a Jacobian matrix and a covariance matrix of pre-integration increments and pre-integration errors of adjacent frames. The sliding window optimization unit adopts window optimization instead of global optimization, which can significantly reduce the calculation amount and ensure the calculation speed. The visual inertia module can output real-time accurate pose information for the laser scanning matching module.

In this implementation, the visual front-end unit 11 takes a monocular camera or binocular camera as input. The monocular camera or binocular camera captures initial images. The visual front-end unit 11 tracks feature points of each frame by using a KLT sparse optical flow algorithm. The visual front-end unit 11 includes a detector. The detector detects corner features and keeps a minimum number of the feature points in each of the initial images. The detector is configured to set a minimum pixel interval between two adjacent feature points. The visual front-end unit 11 removes distortion of the feature points, removes mismatched feature points by using a RANSAC algorithm and a fundamental matrix model, and projects correctly matched feature points onto a unit sphere. Thus, the feature points can be further optimized.

In this implementation, preferably, the minimum number of the feature points in each image ranges from 100 to 300.

In this implementation, the selecting the keyframe specifically includes:
determining whether an average parallax of the tracked feature points between a current frame and the latest keyframe exceeds a threshold, taking the current frame as a new keyframe if the average parallax exceeds a first threshold, and taking the frame as the new keyframe if the number of the tracked feature points of the frame is below a second threshold. In this case, complete loss of feature tracking is prevented.

In this implementation, state variables in a sliding window of the sliding window optimization unit 13 are:

$$\chi = \left[ x_0, x_1, \cdots x_n, x_c^b, \lambda_0, \lambda_1, \cdots \lambda_m \right]$$

$$x_k = \left[ p_{b_k}^w, v_{b_k}^w, q_{b_k}^w, b_a, b_g \right], k \in [0, n]$$

$$x_c^b = \left[ p_c^b, q_c^b, t_c^b \right]$$

where $x_k$ corresponds to an IMU state of a $k^{th}$-frame image, including a position, a speed, and an attitude of an IMU in the world coordinate system, and an accelerometer bias and a gyroscope bias in an IMU coordinate system. n and m denote the number of keyframes and the number of feature points in the sliding window respectively. $\lambda_1$ denotes an inverse depth of the 1st feature point on its first observation frame. $x_c^b$ denotes external parameters from a camera to the IMU, including a position, an attitude, and a delay.

In order to calculate state variables in the sliding window, the formula is solved by nonlinear optimization. $r_B\left(\hat{z}_{b_{k+1}}^{b_k}, x\right)$, $r_C\left(\hat{z}_l^{C_j}, x\right)$ and $r_O\left(\hat{z}_{O_{k+1}}^{O_k}, x\right)$ denote IMU, visual, and mileage measurement errors respectively.

denotes all IMU measurements in the window, C denotes a feature point observed at least twice in the window, and O denotes all mileage measurements in the window. denotes prior information obtained by marginalization.

$$\min_{\chi}\left\{\left\|r_p - H_p\chi\right\|^2 + \sum_{k\in B}\left\|r_B(\hat{z}^{b_k}_{b_{k+1}},\chi)\right\|^2_{p^{b_k}_{b_{k+1}}} + \sum_{(i,j)\in C}\rho\left\|r_C(\hat{z}^{c_j}_l,\chi)\right\|^2_{p^{c_j}_l} + \sum_{k\in O}\left\|r_O(\hat{z}^{o_k}_{o_{k+1}},\chi)\right\|^2_{p^{o_k}_{b_{k+1}}}\right\}$$

In some examples, in order to ensure a fixed window length, redundant keyframes are required to be discarded. However, in order to retain constraints of the discarded keyframes on other frames in the window, there is a need to transform the discarded information into prior information. The transformation process is called marginalization and specifically realized by Schur complement calculation.

In this implementation, the laser scanning matching module 20 includes a lidar. The lidar acquires a scanning point, transforms the scanning point according to the pose information and the IMU observation value, and converts the scanning point into a three-dimensional point cloud in a coordinate system where the robot is located at a current moment. Thus, serious motion distortion generated when a rotation speed of the lidar is slower than a moving speed of the robot can be prevented, thereby significantly improving the accuracy of pose estimation.

In some examples, a two-dimensional or three-dimensional laser may be selected for the lidar. In order to reduce the calculation amount of three-dimensional laser matching, geometric features including edge points and planar points are required to be extracted.

In this implementation, the first threshold, the second threshold, and the third threshold may be any preset values.

An implementation of the present disclosure further relates to a robot. The robot includes the loop closure detection system 30 as described above. The loop closure detection system 30 will not be described in detail again. In this case, the speed and accuracy of loop closure detection in cases of a change in a viewing angle of the robot, a change in the environmental brightness, a weak texture, etc. can be significantly improved.

Optionally, an embodiment of the present disclosure further provides a loop closure detection method applied to a mobile robot. The loop closure detection method includes:

extracting an image descriptor of a current keyframe, comparing the image descriptor with an image descriptor of a keyframe in a keyframe data set, selecting a similar keyframe with highest similarity, and inserting the similar keyframe into the keyframe data set;

matching feature points of the current keyframe and the similar keyframe through a fast feature point extraction and description algorithm, removing mismatched feature points by using a RANSAC algorithm and a fundamental matrix model, and when the number of correctly matched feature points reaches a third threshold, solving relative pose transformation from the current keyframe to the similar keyframe by using the RANSAC algorithm and a PnP method; and

selecting two voxel subgraphs associated with the current keyframe and the similar keyframe respectively, taking the relative pose transformation as an initial value, and matching the two voxel subgraphs by using an ICP algorithm, to obtain final relative pose transformation.

Optionally, the method further includes:

extracting the image descriptor of the keyframe by using a deep neural network, comparing the image descriptor with an image descriptor of a previous keyframe to determine whether a closed loop exists, and if the closed loop exists, determining pose transformation of the two keyframes by using the PnP method, and solving a loop closure pose constraint according to the pose transformation and the voxel subgraph.

An embodiment of the present disclosure further provides a computer storage medium. The computer storage medium stores a computer program. When the computer program is executed, the loop closure detection method as described above is performed.

Those of ordinary skill in the art can understand that some or all procedures in the methods in the foregoing embodiments may be implemented by a computer program instructing related hardware. The computer program may be stored in a non-volatile computer-readable storage medium, and when the computer program is executed, the procedures in the foregoing method embodiments may be implemented. Any reference to the memory, storage, database, or other media used in the embodiments provided in the present disclosure may include a non-volatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external high-speed cache memory. By way of illustration instead of limitation, the RAM is available in a variety of forms, such as a static RAM (SRAM), a dynamic RAM (DRAM), a synchronous DRAM (SDRAM), a dual data rate SDRAM (DDRSDRAM), an enhanced SDRAM (ESDRAM), a synchronization link (Synchlink) DRAM (SLDRAM), a memory Bus (Rambus) direct RAM (RDRAM), a direct memory bus dynamic RAM (DRDRAM), and a memory bus dynamic RAM (RDRAM).

The implementations described above do not limit the protection scope of the technical solution. Any modification, equivalent replacement or improvement made within the spirit and principles of the above implementation shall be included in the protection scope of the technical solution.

**Claims**

1. A loop closure detection system operating on a mobile robot, the loop closure detection system comprising:

   a similarity detection unit configured to extract an image descriptor of a current keyframe, compare the image descriptor with an image descriptor of a keyframe in a keyframe data set, select a similar keyframe with highest similarity, and insert the similar keyframe into the keyframe data set;
   a visual pose solving unit configured to match feature points of the current keyframe and the similar keyframe through a fast feature point extraction and description algorithm, remove mismatched feature points by using a random sample consensus (RANSAC) algorithm and a fundamental matrix model, and when the number of correctly matched feature points reaches a third threshold, solve relative pose transformation from the current keyframe to the similar keyframe by using the RANSAC algorithm and a perspective-n-point (PnP) method; and
   a laser pose solving unit configured to select two voxel subgraphs associated with the current keyframe and the similar keyframe respectively, take the relative pose transformation as an initial value, and match the two voxel subgraphs by using an iterative closest point (ICP) algorithm, to obtain final relative pose transformation.

2. The loop closure detection system of claim 1, wherein the loop closure detection system extracts the image descriptor of the keyframe by using a deep neural network, compares the image descriptor with an image descriptor of a previous keyframe to determine whether a closed loop exists, and if the closed loop exists, determines pose transformation of the two keyframes by using the PnP method, and solves a loop closure pose constraint according to the pose transformation and the voxel subgraph.

3. A multi-sensor fusion SLAM system comprising the loop closure detection system of claim 1, and further comprising:

   a scanning matching module configured to use pose information as an initial value, match laser scanned point cloud with a voxel map to solve an advanced pose, integrate the point cloud into the voxel map according to the advanced pose, and derive a new voxel subgraph, the laser scanning matching module generating a laser matching constraint; and
   a visual laser image optimization module configured to correct an accumulated error of the system according to the pose information, the laser matching constraint, and the loop closure pose constraint after the closed loop occurs;
   wherein the loop closure pose constraint is sent to the laser scanning matching module.

4. The multi-sensor fusion SLAM system of claim 1, wherein the laser scanned point cloud is matched with the voxel map to solve the advanced pose by using an ICP algorithm.

5. The multi-sensor fusion SLAM system of claim 1, wherein the visual inertia module includes:

   a visual front-end unit configured to select the keyframe;
   an inertial measurement unit (IMU) pre-integration unit configured to generate an IMU observation value; and
   a sliding window optimization unit configured to jointly optimize a visual reprojection error, an inertial measurement error, and a mileage measurement error.

6. The multi-sensor fusion SLAM system of claim 5, wherein the visual front-end unit takes a monocular camera or binocular camera as input, the monocular camera or binocular camera being configured to capture initial images,

   the visual front-end unit is configured to track feature points of each frame by using a Kanade-Lucas-Tomasi (KLT) sparse optical flow algorithm,

the visual front-end unit includes a detector, the detector detecting corner features and keeping a minimum number of the feature points in each of the initial images, the detector being configured to set a minimum pixel interval between two adjacent feature points, and

the visual front-end unit is configured to remove distortion of the feature points, remove mismatched feature points by using a RANSAC algorithm and a fundamental matrix model, and project correctly matched feature points onto a unit sphere.

**7.** The multi-sensor fusion SLAM system of claim 6, wherein the selecting the keyframe specifically includes: determining whether an average parallax of the tracked feature points between a current frame and the latest keyframe exceeds a threshold, taking the current frame as a new keyframe if the average parallax exceed a first threshold, and taking the frame as the new keyframe if the number of the tracked feature points of the frame is below a second threshold.

**8.** The multi-sensor fusion SLAM system of claim 5, wherein the laser scanning matching module includes a lidar configured to acquire a scanning point, transform the scanning point according to the pose information and the IMU observation value, and convert the scanning point into a three-dimensional point cloud in a coordinate system where the robot is located at a current moment.

**9.** A robot comprising the loop closure detection system of claim 1 or 2.

**10.** A loop closure detection method applied to a mobile robot, the loop closure detection method comprising:

extracting an image descriptor of a current keyframe, comparing the image descriptor with an image descriptor of a keyframe in a keyframe data set, selecting a similar keyframe with highest similarity, and inserting the similar keyframe into the keyframe data set;

matching feature points of the current keyframe and the similar keyframe through a fast feature point extraction and description algorithm, removing mismatched feature points by using a RANSAC algorithm and a fundamental matrix model, and when the number of correctly matched feature points reaches a third threshold, solving relative pose transformation from the current keyframe to the similar keyframe by using the RANSAC algorithm and a PnP method; and

selecting two voxel subgraphs associated with the current keyframe and the similar keyframe respectively, taking the relative pose transformation as an initial value, and matching the two voxel subgraphs by using an ICP algorithm, to obtain final relative pose transformation.

**11.** The loop closure detection method of claim 10, further comprising:

extracting the image descriptor of the keyframe by using a deep neural network, comparing the image descriptor with an image descriptor of a previous keyframe to determine whether a closed loop exists, and if the closed loop exists, determining pose transformation of the two keyframes by using the PnP method, and solving a loop closure pose constraint according to the pose transformation and the voxel subgraph.

**12.** A computer storage medium storing a computer program, wherein when the computer program is executed, the loop closure detection method of claim 10 or 11 is performed.

30

Similarity Detection Unit

Visual Pose Solving Unit

31

32

Laser Pose Solving Unit

33

FIG. 1

100

| | |
|---|---|
| Visual Inertia Module | Laser Scanning Matching Module |
| 10 | 20 |
| Visual Laser Image Optimization Module | Loop Closure Detection Module |
| 40 | 30 |

FIG. 2

10

Visual Front-End Unit

11

IMU Pre-Integration Unit

12

Sliding Window
Optimization Unit

13

FIG. 3

## INTERNATIONAL SEARCH REPORT

| International application No. |
| --- |
| **PCT/CN2020/135029** |

### A. CLASSIFICATION OF SUBJECT MATTER

G06T 7/73(2017.01)i; G01S 17/02(2020.01)i

According to International Patent Classification (IPC) or to both national classification and IPC

### B. FIELDS SEARCHED

Minimum documentation searched (classification system followed by classification symbols)

G06T, G01S

Documentation searched other than minimum documentation to the extent that such documents are included in the fields searched

Electronic data base consulted during the international search (name of data base and, where practicable, search terms used)

DWPI, SIPOABS, WOTXT, CNABS, CNKI: 图像, 帧, 相似, 位姿, 姿态, 变换, 检测, 感应, 闭环, 机器人, 激光; image, frame, pose, offset, transform+, detect+, chang+, sens+, shift+, close loop, robot, laser

### C. DOCUMENTS CONSIDERED TO BE RELEVANT

| Category* | Citation of document, with indication, where appropriate, of the relevant passages | Relevant to claim No. |
| --- | --- | --- |
| PX | CN 111275763 A (PUDU TECHNOLOGY INC.) 12 June 2020 (2020-06-12) entire document | 1-12 |
| Y | US 2019277632 A1 (DEEPMAP INC) 12 September 2019 (2019-09-12) description, paragraphs 102-121, figure 11 | 1, 2, 9-12 |
| Y | CN 107680133 A (CHONGQING UNIVERSITY OF POSTS AND TELECOMMUNICATIONS) 09 February 2018 (2018-02-09) description, paragraphs 6-51 | 1, 2, 9-12 |
| A | CN 109556596 A (BEIJING GEEKPLUS TECHNOLOGY CO., LTD.) 02 April 2019 (2019-04-02) entire document | 1-12 |
| A | CN 106324616 A (PUDU TECHNOLOGY INC.) 11 January 2017 (2017-01-11) entire document | 1-12 |
| A | CN 110428467 A (SICHUAN UNIVERSITY) 08 November 2019 (2019-11-08) entire document | 1-12 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **02 March 2021** | **09 March 2021** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

<table>
<tr><td colspan="2"><b>INTERNATIONAL SEARCH REPORT</b><br><b>Information on patent family members</b></td><td colspan="2">International application No.<br><br><b>PCT/CN2020/135029</b></td></tr>
<tr><td>Patent document<br>cited in search report</td><td>Publication date<br>(day/month/year)</td><td>Patent family member(s)</td><td>Publication date<br>(day/month/year)</td></tr>
<tr><td>CN   111275763  A</td><td>12 June 2020</td><td>None</td><td></td></tr>
<tr><td>US   2019277632  A1</td><td>12 September 2019</td><td>US   2018188039  A1</td><td>05 July 2018</td></tr>
<tr><td></td><td></td><td>US   2018188042  A1</td><td>05 July 2018</td></tr>
<tr><td></td><td></td><td>US   10837773  B2</td><td>17 November 2020</td></tr>
<tr><td></td><td></td><td>US   2018190016  A1</td><td>05 July 2018</td></tr>
<tr><td></td><td></td><td>US   10267634  B2</td><td>23 April 2019</td></tr>
<tr><td></td><td></td><td>CN   110832279  A</td><td>21 February 2020</td></tr>
<tr><td></td><td></td><td>US   2018188038  A1</td><td>05 July 2018</td></tr>
<tr><td></td><td></td><td>US   2018188041  A1</td><td>05 July 2018</td></tr>
<tr><td></td><td></td><td>US   10598489  B2</td><td>24 March 2020</td></tr>
<tr><td></td><td></td><td>US   10267635  B2</td><td>23 April 2019</td></tr>
<tr><td></td><td></td><td>US   2018188040  A1</td><td>05 July 2018</td></tr>
<tr><td></td><td></td><td>CN   110832348  A</td><td>21 February 2020</td></tr>
<tr><td></td><td></td><td>US   10309777  B2</td><td>04 June 2019</td></tr>
<tr><td></td><td></td><td>US   10309778  B2</td><td>04 June 2019</td></tr>
<tr><td></td><td></td><td>US   10222211  B2</td><td>05 March 2019</td></tr>
<tr><td></td><td></td><td>WO   2018126083  A1</td><td>05 July 2018</td></tr>
<tr><td></td><td></td><td>US   10422639  B2</td><td>24 September 2019</td></tr>
<tr><td></td><td></td><td>US   2020284581  A1</td><td>10 September 2020</td></tr>
<tr><td></td><td></td><td>US   2020225032  A1</td><td>16 July 2020</td></tr>
<tr><td></td><td></td><td>WO   2018125939  A1</td><td>05 July 2018</td></tr>
<tr><td></td><td></td><td>CN   111108342  A</td><td>05 May 2020</td></tr>
<tr><td></td><td></td><td>US   2018188027  A1</td><td>05 July 2018</td></tr>
<tr><td></td><td></td><td>WO   2018125938  A1</td><td>05 July 2018</td></tr>
<tr><td></td><td></td><td>US   2018188026  A1</td><td>05 July 2018</td></tr>
<tr><td></td><td></td><td>US   2018188043  A1</td><td>05 July 2018</td></tr>
<tr><td></td><td></td><td>US   10527417  B2</td><td>07 January 2020</td></tr>
<tr><td>CN   107680133  A</td><td>09 February 2018</td><td>None</td><td></td></tr>
<tr><td>CN   109556596  A</td><td>02 April 2019</td><td>WO   2020078064  A1</td><td>23 April 2020</td></tr>
<tr><td></td><td></td><td>US   2020333162  A1</td><td>22 October 2020</td></tr>
<tr><td>CN   106324616  A</td><td>11 January 2017</td><td>CN   106324616  B</td><td>26 February 2019</td></tr>
<tr><td>CN   110428467  A</td><td>08 November 2019</td><td>CN   110428467  B</td><td>19 May 2020</td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010062310